(19) Europäisches Patentamt
European Patent Office
Office européen des brevets

(11) EP 4 734 019 A1

(12) EUROPÄISCHE PATENTANMELDUNG

(43) Veröffentlichungstag:
29.04.2026 Patentblatt 2026/18

(21) Anmeldenummer: 24209174.2

(22) Anmeldetag: 28.10.2024

(51) Internationale Patentklassifikation (IPC):
G06Q 10/04 $^{(2023.01)}$  G06Q 10/0637 $^{(2023.01)}$
G06Q 50/04 $^{(2012.01)}$  G06Q 50/06 $^{(2024.01)}$
G06Q 10/20 $^{(2023.01)}$

(52) Gemeinsame Patentklassifikation (CPC):
G06Q 10/04; G06Q 10/06375; G06Q 10/20;
G06Q 50/04; G06Q 50/06

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Siemens Aktiengesellschaft
80333 München (DE)

(72) Erfinder:
• SZABO, Andrei
81739 München (DE)
• WILES, Jeremy Ralph
20128 Mailand (IT)
• BAMBERGER, Joachim
80333 München (DE)
• SCHMIDLY, Brian
30092 Peachtree Corners GA (US)

(74) Vertreter: Siemens Patent Attorneys
Postfach 22 16 34
80506 München (DE)

(54) **VERFAHREN UND ANORDNUNGEN ZUR OPTIMIERUNG TECHNISCHER ANLAGEN**

(57) Die Erfindung bezieht sich u. a. auf ein computerimplementiertes Verfahren zur Optimierung technischer Anlagen eines vorgegebenen Anlagenbestands (AG) mittels einer Datenverarbeitungsanlage (100). Vorgesehen ist beispielsweise, dass für jede technische Anlage des vorgegebenen Anlagenbestands (AG) jeweils eine anlagenbezogene Ist-Leistungskennzahl (IAKL) erster Art ermittelt wird, die eine Eigenschaft der jeweiligen Anlage beschreibt, mit den anlagenbezogenen Ist-Leistungskennzahlen (IAKL) erster Art eine bestandsbezogene Ist-Leistungskennzahl (IBKL) erster Art des Anlagenbestands (AG) gebildet wird, die die Eigenschaft bezogen auf den Anlagenbestand (AG) beschreibt, und ein Optimierungsverfahren durchgeführt wird, bei dem Anlagenmodifikationen simuliert werden und für jede simulierte Anlagenmodifikation jeweils zumindest eine simulierte anlagenbezogene Leistungskennzahl (ALK) erster Art ermittelt wird, unter Heranziehung der simulierten anlagenbezogenen Leistungskennzahlen (ALK) erster Art für jede simulierte Anlagenmodifikation jeweils eine simulierte bestandsbezogene Leistungskennzahl (BLK) erster Art gebildet wird, nach einer veränderten Ausgestaltung einer oder mehr Anlagen des Anlagenbestands (AG) gesucht wird, die zu einer Verbesserung der simulierten bestandsbezogenen Leistungskennzahl (BLK) erster Art - verglichen mit der bestandsbezogenen Ist-Leistungskennzahl (IAKL) erster Art - gemäß einem vorgegebenen Sollkriterium führt, und bei Auffinden einer das Sollkriterium erfüllenden veränderten Ausgestaltung ein Datensatz (DS) ausgegeben wird, der die veränderte Ausgestaltung der Anlagen und/oder Maßnahmen, die zu der veränderten Ausgestaltung führen, beschreibt.

FIG 8

**Beschreibung**

Die Erfindung bezieht sich auf ein computerimplementiertes Verfahren zur Optimierung technischer Anlagen eines vorgegebenen Anlagenbestands. Der Anlagenbestand kann auch als Flotte bzw. Anlagenflotte bezeichnet werden, wobei der Anlagenbestand beispielsweise schon existieren kann, aber nicht muss, also sich beispielsweise erst in einer Projektierungsphase befinden kann.

Der Erfindung liegt die Aufgabe zugrunde, ein Verfahren anzugeben, mit dem sich Anlagenbestände besonders aufwandsarm optimieren lassen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass für jede technische Anlage des vorgegebenen Anlagenbestands jeweils eine anlagenbezogene Ist-Leistungskennzahl erster Art ermittelt wird, die eine Eigenschaft der jeweiligen Anlage beschreibt, mit den anlagenbezogenen Ist-Leistungskennzahlen erster Art eine bestandsbezogene Ist-Leistungskennzahl erster Art des Anlagenbestands gebildet wird, die die Eigenschaft bezogen auf den Anlagenbestand beschreibt, und ein Optimierungsverfahren durchgeführt wird, bei dem Anlagenmodifikationen simuliert werden und für jede simulierte Anlagenmodifikation jeweils zumindest eine simulierte anlagenbezogene Leistungskennzahl erster Art ermittelt wird, unter Heranziehung der simulierten anlagenbezogenen Leistungskennzahlen erster Art für jede simulierte Anlagenmodifikation jeweils eine simulierte bestandsbezogene Leistungskennzahl erster Art gebildet wird, nach einer veränderten Ausgestaltung einer oder mehr Anlagen des Anlagenbestands gesucht wird, die zu einer Verbesserung der simulierten bestandsbezogenen Leistungskennzahl erster Art - verglichen mit der bestandsbezogenen Ist-Leistungskennzahl erster Art - gemäß einem vorgegebenen Sollkriterium führt, und bei Auffinden einer das Sollkriterium erfüllenden veränderten Ausgestaltung ein Datensatz ausgegeben wird, der die veränderte Ausgestaltung der Anlagen und/oder Maßnahmen, die zu der veränderten Ausgestaltung führen, beschreiben.

Ein wesentlicher Vorteil des erfindungsgemäßen Verfahrens ist darin zu sehen, dass dieses vollautomatisiert eine Vielzahl an Anlagenausgestaltungen berücksichtigen kann und dabei eine bestandsbezogene Lösung sucht, also keine anlagenindividuelle Lösung. Mit anderen Worten besteht der erfindungsgemäße Gedanke darin, den Anlagenbestand bzw. die Flotte insgesamt zu verbessern, wobei zwar die Anlagen mit ihren jeweiligen Eigenschaften berücksichtigt werden, aber diese bei der Suche nach einem Optimum des gesamten Anlagenbestands nur mittelbar beitragen; es kann also im Rahmen des erfindungsgemäßen Verfahrens zu bestandsbezogenen Optimierungsmaßnahmen kommen, bei denen nicht alle Anlagen verändert werden, sondern manche Anlagen unverändert und sogar ungewünscht unterdurchschnittlich bleiben, weil sich das Sollkriterium allein durch eine Modifikation einzelner anderer Anlagen beispielsweise mit sehr geringem Änderungsaufwand erreichen lässt.

Mit Blick auf eine automatisierte Durchführung des Verfahrens ohne vorherige Kenntnis aller Anlagendaten wird es als vorteilhaft angesehen, wenn das Ermitteln von Anlagendaten, die eine Berechnung der anlagenbezogenen Leistungskennzahlen ermöglichen, eine automatisierte Internetrecherche mit einem Scraping-Werkzeug (WEB-Scrapingwerkzeug) und einem Zugriff auf Datenbanken mit öffentlich zugänglichen Informationen einschließt. Geeignete Scraping-Werkzeuge zur computergestützten Recherche und Datenermittlung sind allgemein bekannt.

Vorteilhaft ist es, wenn die anlagenbezogene Ist-Leistungskennzahl erster Art, die bestandsbezogene Ist-Leistungskennzahl erster Art, die simulierten anlagenbezogenen Leistungskennzahlen erster Art und die simulierten bestandsbezogenen Leistungskennzahlen erster Art jeweils dieselbe technische Größe beschreiben oder - im Falle einer Zusammenfassung von Einzelkriterien zu einer zusammengefassten Kennzahl - auf denselben technischen Größen beruhen.

Die anlagenbezogene Ist-Leistungskennzahl erster Art, die bestandsbezogene Ist-Leistungskennzahl erster Art, die simulierten anlagenbezogenen Leistungskennzahlen erster Art und die simulierten bestandsbezogenen Leistungskennzahlen erster Art können jeweils als technische Größe den $CO_2$-Ausstoß der jeweiligen Anlage bzw. des Anlagenbestands unmittelbar angeben oder diesen zumindest auch berücksichtigen oder die Zeitdauer des Weiterbetriebs der jeweiligen Anlage bzw. des Anlagenbestands im Falle eines Ausfalls eines die Anlagen versorgenden externen Energieversorgungsnetzes unmittelbar angeben oder diese zumindest auch berücksichtigen oder den Energieverbrauch der jeweiligen Anlage bzw. des Anlagenbestands unmittelbar angeben oder diesen zumindest auch berücksichtigen oder die Energiekosten der jeweiligen Anlage bzw. des Anlagenbestands unmittelbar angeben oder diesen zumindest auch berücksichtigen oder die Betriebskosten der jeweiligen Anlage bzw. des Anlagenbestands angeben oder diese zumindest auch berücksichtigen oder die Restlebensdauer der jeweiligen Anlage bzw. des Anlagenbestands unmittelbar angeben oder diese zumindest auch berücksichtigen oder die Nachhaltigkeit der jeweiligen Anlage bzw. des Anlagenbestands unmittelbar quantifizieren oder diese zumindest auch berücksichtigen oder den Anteil an nachhaltig erzeugter Energie am Gesamtenergieverbrauch der jeweiligen Anlage bzw. des Anlagenbestands unmittelbar quantifizieren oder diese zumindest auch berücksichtigen.

Von Vorteil ist es beispielsweise, wenn für jede Anlage des Anlagenbestands jeweils anlagenbezogene Leistungskennzahlen zweier oder mehr unterschiedlicher Arten ermittelt werden und diese zu zwei oder mehr korrespondierenden bestandsbezogenen Leistungskennzahlen der jeweils entsprechenden Art zusammengefasst werden, im Rahmen des Optimierungsverfahrens für jede Anlagenmodifikation einer oder mehr Anlagen des Anlagenbestands jeweils die simulierten bestandsbezogenen Leistungskennzahlen der zwei oder mehr Arten ermittelt werden und das Sollkriterium vorsieht, dass alle oder zumindest eine vorgegebene Mindestzahl an simulierten bestandsbezogenen Leistungskennzahlen ein artindividuelles Einzelkriterium erfüllen.

Zumindest eine der Arten an Leistungskennzahlen bezieht sich vorzugsweise auf den notwendigen Änderungsaufwand.

Bei der Suche nach der das Sollkriterium erfüllenden veränderten Ausgestaltung werden vorzugsweise alle Anlagen des Anlagenbestands einbezogen.

Das Optimierungsverfahren erfolgt vorzugsweise unter Einbezug eines Diskretisierens des Suchraumes und bei der Suche nach der das Sollkriterium erfüllenden Ausgestaltung wird vorzugsweise angenommen, dass die Anlagen extern vorgegebenen Randbedingungen unterworfen sind. Vorzugsweise werden nur solche Anlagenmodifikationen im Rahmen des Optimierungsverfahrens bei der Berechnung der anlagenbezogenen und bestandsbezogenen Leistungskennzahlen berücksichtigt, die sich auf die extern vorgegebenen Randbedingungen erfüllende Anlagen beziehen.

Für alle Anlagenmodifikationen, die zu die extern vorgegebenen Randbedingungen erfüllenden Anlagen führen, werden vorzugsweise jeweils die simulierten bestandsbezogenen Leistungskennzahlen gebildet und es wird vorzugsweise anhand aller ermittelten bestandsbezogenen Leistungskennzahlen die oder eine der das Sollkriterium erfüllenden veränderten Ausgestaltungen ausgewählt.

Bei einer als bevorzugt angesehenen Ausführungsvariante ist vorgesehen, dass für das Optimierungsverfahren von einer initialen Anlagenmodifikation ausgegangen und diese initiale Anlagenmodifikation im Rahmen der Optimierung modifiziert wird, bis die das Sollkriterium erfüllende veränderte Ausgestaltung aufgefunden wird.

Das Optimierungsverfahren kann eine hierarchische Zwei-Level-Optimierung umfassen.

Alternativ oder zusätzlich kann in vorteilhafter Weise vorgesehen sein, dass bei der Suche nach der das Sollkriterium erfüllenden Ausgestaltung die Anlagen des Anlagenbestands clusterbezogen berücksichtigt werden, indem jede der Anlagen zunächst jeweils einem von zumindest zwei unterschiedlichen Clustern zugeordnet wird und die Berechnung der jeweiligen simulierten anlagenbezogenen Leistungskennzahlen anhand der Eigenschaften einer dem jeweiligen Cluster zugeordneten Clusterreferenzanlage erfolgt.

Alternativ oder zusätzlich kann in vorteilhafter Weise vorgesehen sein, dass bei der Suche nach der das Sollkriterium erfüllenden Ausgestaltung die Maßnahmen unter Bildung eines vorgegebenen Maßnahmenkatalogs, in dem eine Vielzahl an möglichen Maßnahmen aufgeführt ist, ausgewählt werden.

Alternativ oder zusätzlich kann in vorteilhafter Weise vorgesehen sein, dass bei der Suche nach der das Sollkriterium erfüllenden Ausgestaltung angenommen wird, dass sich die anlagenbezogenen Leistungskennzahlen linear mit einer auf den Umfang der jeweiligen Änderungsmaßnahme bezogenen Änderungsrate ändern, und die Berechnung der anlagenbezogenen Leistungskennzahlen die Multiplikation der Änderungsrate mit dem jeweiligen durch die Änderungsmaßnahme vorgesehenen Änderungsumfang einschließt.

Das Sollkriterium kann in vorteilhafter Weise vorsehen, dass eine gewünschte Mindestverbesserung der simulierten bestandsbezogenen Leistungskennzahl erreicht wird.

Alternativ oder zusätzlich kann das Sollkriterium vorsehen, dass eine maximale Erhöhung der simulierten bestandsbezogenen Leistungskennzahl für einen vorgegebenen Änderungsaufwand erreicht wird.

Die Bildung der bestandsbezogenen Leistungskennzahlen kann eine Mittelwert- oder Summenbildung der anlagenbezogenen Leistungskennzahlen einschließen.

Zumindest eine der Anlagen des Anlagenbestands ist vorzugsweise ein Gebäude oder eine Fabrik.

Auch kann in vorteilhafter Weise vorgesehen sein, dass nach dem Auffinden der das Sollkriterium erfüllenden veränderten Ausgestaltung ein Betriebsdatensatz erzeugt wird, der für den Betrieb der veränderten Ausgestaltung der Anlagen des Anlagenbestands geeignete Betriebsparameter enthält.

Das Betriebsverhalten der das Sollkriterium erfüllenden veränderten Ausgestaltung der Anlagen des Anlagenbestands wird vorzugsweise im realen Betrieb beobachtet und es werden die Betriebsparameter des Betriebsdatensatzes während des Anlagenbetriebs vorzugsweise angepasst, wenn das tatsächlich beobachtete Betriebsverhalten von dem simulierten Betriebsverhalten abweicht.

Auch kann vorgesehen sein, dass das Betriebsverhalten der das Sollkriterium erfüllenden veränderten Ausgestaltung der Anlagen des Anlagenbestands im realen Betrieb beobachtet wird und Anlageneigenschaften ermittelt werden, die anschließend für eine erneute Durchführung des Verfahrens zur Optimierung des Anlagenbestands herangezogen werden.

Die Erfindung bezieht sich außerdem auf ein Computerprogrammprodukt. Diesbezüglich ist erfindungsgemäß vorgesehen, dass das Computerprogrammprodukt Programmbefehle umfasst, um eine Datenverarbeitungsanlage zu veranlassen, ein Verfahren wie oben beschrieben auszuführen, wenn das Computerprogrammprodukt auf der Datenverarbeitungsanlage ausgeführt wird.

Die Erfindung bezieht sich außerdem auf eine Datenverarbeitungsanlage. Diesbezüglich ist erfindungsgemäß vorgesehen, dass die Datenverarbeitungsanlage mit einem ComputerProgrammprodukt wie beschrieben programmiert ist oder das Computerprogrammprodukt zumindest in einem Speicher der Datenverarbeitungsanlage abgespeichert ist.

Die Erfindung wird nachfolgend anhand von Ausführungsbeispielen näher erläutert; dabei zeigen beispielhaft:

Fig. 1-6    Anordnungen, die zur Durchführung von Ausführungsbeispielen erfinderischer Verfahren zur Optimierung technischer Anlagen eines vorgegebenen Anlagenbestands geeignet sind, und

Fig. 7-8    Ausführungsbeispiele für Anordnungen, die zusätzlich zur Steuerung des optimierten Anlagenbestands geeignet sind.

In den Figuren werden der Übersicht halber für identische oder vergleichbare Komponenten stets dieselben Bezugszeichen verwendet.

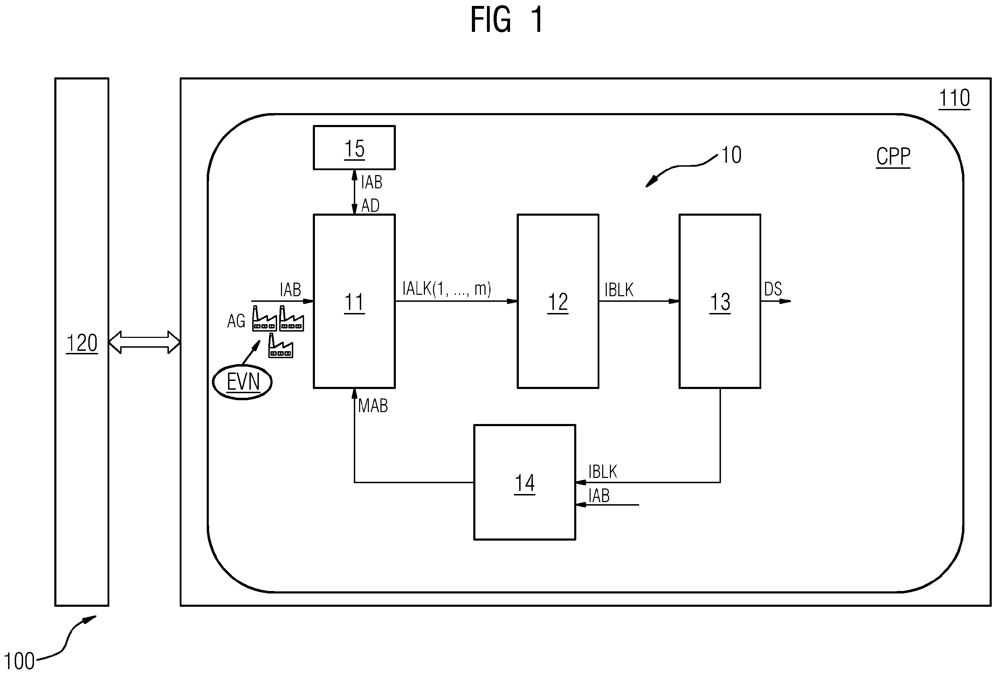

Die Figur 1 zeigt ein erstes Ausführungsbeispiel für eine Anordnung 10, anhand derer beispielhaft Ausführungsvarianten erfindungsgemäßer Verfahren erläutert werden.

Die Anordnung 10 umfasst eine Leistungsbestimmungseinrichtung 11, eine der Leistungsbestimmungseinrichtung 11 nachgeordnete Zusammenfassungseinrichtung 12, eine der Zusammenfassungseinrichtung 12 nachgeordnete Bewertungseinrichtung 13 und eine der Bewertungseinrichtung 13 nachgeordnete Modifikationsreinrichtung 14. Darüber hinaus umfasst eine Datenverarbeitungsanlage 100 ein Scrapingwerkzeug 15, auf das die Leistungsbestimmungseinrichtung 11 bei Bedarf zugreifen kann.

Die genannten Einrichtungen, also die Leistungsbestimmungseinrichtung 11, die Zusammenfassungseinrichtung 12, die Bewertungseinrichtung 13, die Modifikationsreinrichtung 14 und das Scrapingwerkzeug 15 werden durch Softwaremodule eines Computerprogrammprodukts CPP gebildet, das in einem Speicher 110 der Datenverarbeitungsanlage 100 abgespeichert ist und von einer Recheneinrichtung 120 der Datenverarbeitungsanlage 100 ausgeführt werden kann.

Die Anordnung 10 kann beispielsweise wie folgt arbeiten bzw. betrieben werden:
Wird in einer ersten Phase eine initiale Anlagenbeschreibung IAB in die Datenverarbeitungsanlage 100 eingegeben (vgl. Figur 1), so wird diese von der Leistungsbestimmungseinrichtung 11 verarbeitet. Die initiale Anlagenbeschreibung IAB umfasst für jede von beispielsweise m (m ist eine natürliche Zahl) technischen Anlagen eines vorgegebenen Anlagenbestands AG, der bereits realisiert bzw. real existent sein kann oder sich noch in der Projektierungsphase befindet, jeweils vorzugsweise Anlagedaten AD, die der Leistungsbestimmungseinrichtung 11 eine Berechnung von anlagenbezogenen Leistungskennzahlen ermöglicht.

Umfasst die initiale Anlagenbeschreibung IAB für die Leistungsbestimmungseinrichtung 11 ungenügende Daten, so kann die Leistungsbestimmungseinrichtung 11 mit Hilfe des Scrapingwerkzeugs 15 anhand der initialen Anlagenbeschreibung IAB eine Internetrecherche durchführen und die für die Berechnung der anlagenbezogenen Leistungskennzahlen nötigen Anlagedaten AD automatisiert aus dem Internet abfragen.

Anschließend errechnet die Leistungsbestimmungseinrichtung 11 für jede Anlage des Anlagenbestands AG jeweils eine anlagenbezogene Ist-Leistungskennzahl IALK erster Art, die eine Eigenschaft der jeweiligen m-ten Anlage beschreibt. Die m anlagenbezogenen Ist-Leistungskennzahlen IALK erster Art können für jede der m Anlagen beispielsweise den Energieverbrauch beschreiben, den die jeweilige m-te Anlage durch Energieentnahme aus einem angeschlossenen Energieversorgungsnetz EVN hervorruft.

Unter Heranziehung der simulierten anlagenbezogenen Leistungskennzahlen IALK erster Art ermittelt die Zusammenfassungseinrichtung 12 für den Anlagenbestand AG eine bestandsbezogene Ist-Leistungskennzahl IBLK erster Art und leitet diese an die Bewertungseinrichtung 13 weiter. Die bestandsbezogene Ist-Leistungskennzahl IBLK erster Art beschreibt im vorliegenden beispielhaften Falle den Energieverbrauch des gesamten Anlagenbestands AG, also die Energie, die der Anlagenbestand AG insgesamt aus dem Energieversorgungsnetz EVN entnimmt. In dem beschriebenen Falle kann die Zusammenfassungseinrichtung 12 die bestandsbezogene Ist-Leistungskennzahl IBLK erster Art beispielsweise durch eine einfache Summation der bestandsbezogenen Ist-Leistungskennzahlen IBLK erster Art ermitteln gemäß:

$$IBLK = \sum_{i=1}^{m} IALK(i)$$

Nachfolgend wird beispielhaft davon ausgegangen, dass der von der initialen Anlagenbeschreibung IAB beschriebene Anlagenbestand AG noch kein gewünschtes Optimum erreicht, weil der Energieverbrauch des Anlagenbestands AG zu hoch ist. Demgemäß wird die der Zusammenfassungseinrichtung 12 nachgeordnete Bewertungseinrichtung 13 feststellen, dass die bestandsbezogene Ist-Leistungskennzahl IBLK ein vorgegebenes Sollkriterium noch nicht erfüllt. In einem solchen Falle leitet die Bewertungseinrichtung 13 die bestandsbezogene Ist-Leistungskennzahl IBLK an die Modifikationsreinrichtung 14 weiter.

Die Modifikationsreinrichtung 14 wird durch die Übermittlung der bestandsbezogenen Ist-Leistungskennzahl IBLK zu einem Modifikationsschritt aufgefordert. Im Rahmen dieses Modifikationsschritts ermittelt die Modifikationsreinrichtung 14 eine Anlagenmodifikation, die eine modifizierte Ausgestaltung einer oder mehr Anlagen des Anlagenbestands AG beschreibt und den Energieverbrauch senken soll, und erzeugt eine modifizierte Anlagenbeschreibung MAB, die einen resultierenden modifizierten Anlagenbestand AG definiert, oder eine Modifikationsmaßnahme, die zu einem entsprechenden modifizierten Anlagenbestand AG führen würde.

Im vorliegenden Falle kann eine veränderte Ausgestaltung der Anlagen und/oder Maßnahmen, die zu der veränderten Ausgestaltung führen, den zusätzlichen Einbau von Solarenergieanlagen zur internen Energieerzeugung oder den Einsatz von konkreten Energiesparmaßnahmen wie beispielsweise eine Verbesserung der Wärmeisolation zur Reduktion des Energieverbrauchs von Klimatisierungsgeräten umfassen.

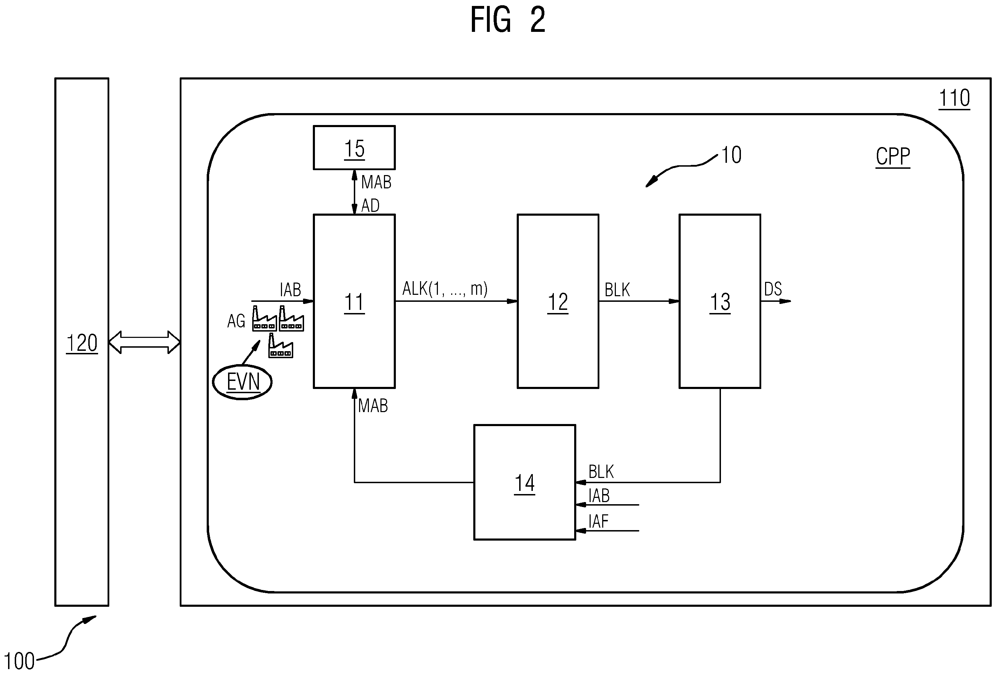

Die modifizierte Anlagenbeschreibung MAB gelangt wieder zu der Leistungsbestimmungseinrichtung 11, die eine erneute Berechnung unter Bildung modifizierter anlagenbezogenen Leistungskennzahlen durchführt (vgl. Figur 2), die nachfolgend zur Unterscheidung von den initialen Ist-Leistungskennzahlen IALK als simulierte anlagenbezogene Leistungskennzahlen bezeichnet werden und in der Figur 2 mit dem Bezugszeichen ALK gekennzeichnet sind. Die m simulierten anlagenbezogenen Leistungskennzahlen ALK gelangen zu der Zusammenfassungseinrichtung 12, die mit diesen eine simulierte bestandsbezogene Leistungskennzahl BLK errechnet.

Die simulierte bestandsbezogene Leistungskennzahl BLK gelangt zu der Bewertungseinrichtung 13, die anhand dieser wieder prüft, ob das Sollkriterium erfüllt wird oder nicht.

Wird das Sollkriterium erfüllt, so wird die Bewertungseinrichtung 13 einen Datensatz DS ausgeben, der die veränderte Ausgestaltung der Anlagen und/oder Maßnahmen, die zu der veränderten Ausgestaltung führen, beschreibt. Im vorliegenden Falle würden die veränderte Ausgestaltung der Anlagen und/oder die Maßnahmen, die zu der veränderten Ausgestaltung führen, also - wie erwähnt - beispielsweise den Einbau von Solarenergieanlagen zur internen Energieerzeugung oder den Einsatz von konkreten Energiesparmaßnahmen wie beispielsweise eine Verbesserung der Wärmeisolation umfassen.

Wird das Sollkriterium hingegen nicht erfüllt, so wird die simulierte bestandsbezogene Leistungskennzahl BLK zu der Modifikationsreinrichtung 14 weitergeleitet und es erfolgen ein oder mehr weitere Durchläufe des Optimierungsverfahrens bzw. der Optimierungsschleife, die durch die Leistungsbestimmungseinrichtung 11, die Zusammenfassungseinrichtung 12, die Bewertungseinrichtung 13 und die Modifikationsreinrichtung 14 gebildet wird, bis das Sollkriterium oder ein sonstiges Abbruchkriterium erfüllt wird.

Bei der Ermittlung weiterer Anlagenmodifikationen kann die Modifikationsreinrichtung 14 beispielsweise die von der Bewertungseinrichtung 13 vorher übermittelten bestandsbezogenen Leistungskennzahlen BLK berücksichtigen. Eine solche Vorgehensweise ermöglicht es der Modifikationsreinrichtung 14, frühere Änderungen, die eine Anlagenverbesserung in einem besonders hohen Maße begünstigt haben, anhand der Optimierungshistorie zu erkennen und besonders erfolgversprechende Änderungen zu priorisieren.

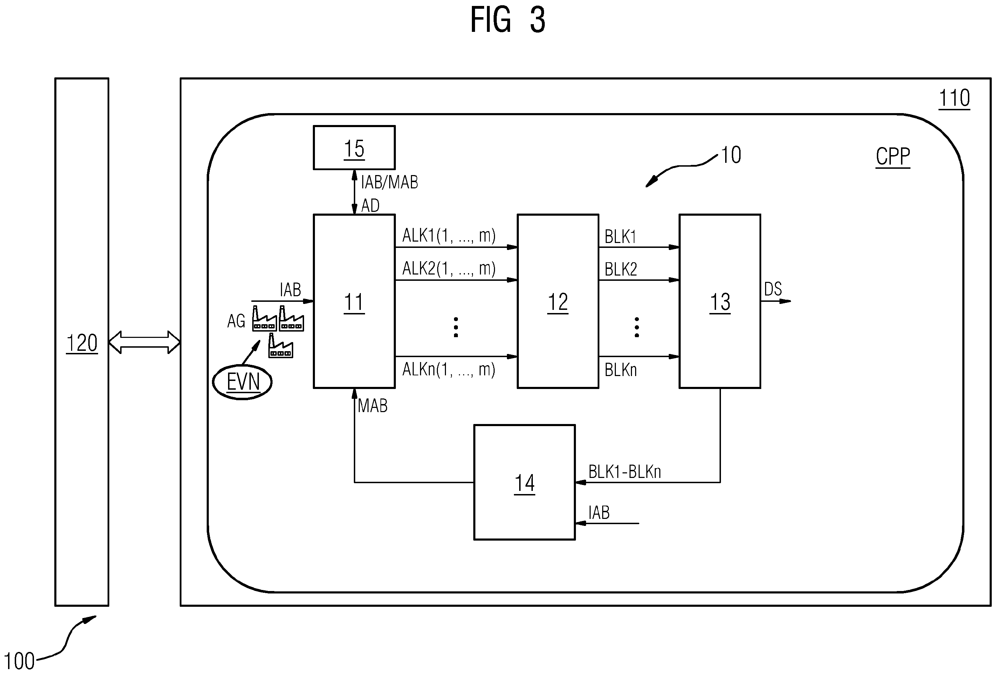

Die Figur 3 zeigt ein zweites Ausführungsbeispiel für eine erfindungsgemäße Anordnung 10, anhand derer beispielhaft Ausführungsvarianten erfindungsgemäßer Verfahren erläutert werden.

Die Anordnung 10 gemäß Figur 3 entspricht der Anordnung 10 gemäß den Figuren 1 und 2 mit dem Unterschied, dass die Leistungsbestimmungseinrichtung 11 für jede von beispielsweise m technischen Anlagen eines vorgegebenen Anlagenbestands AG jeweils eine Berechnung von anlagenbezogenen Leistungskennzahlen. ALK unterschiedlicher Art, beispielsweise erster bis n-ter Art (n ist eine natürliche Zahl, die sich von m unterscheiden kann) ermöglicht. Eine erste Art kann beispielsweise den Energieverbrauch der Anlagen beschreiben, wie dies oben im Zusammenhang mit den Figuren 1 bis 2 beispielhaft beschrieben worden ist, und eine zweite Art kann beispielsweise den $CO_2$-Ausstoß der Anlagen beschreiben.

Unter Heranziehung der anlagenbezogenen Leistungskennzahlen ALK erster bis n-ter Art ermittelt die Zusammenfassungseinrichtung 12 für den Anlagenbestand AG bestandsbezogene Leistungskennzahlen BLK erster bis n-ter Art und leitet diese an die Bewertungseinrichtung 13 weiter.

Die bestandsbezogenen Ist-Leistungskennzahlen erster bis n-ter Art werden von der Bewertungseinrichtung 13 ausgewertet: Erreicht der durch die bestandsbezogene Leistungskennzahlen BLK erster bis n-ter Art beschriebene Anlagenzustand ein gewünschtes Maß, so gibt die Bewertungseinrichtung 13 einen Datensatz DS aus, der die entsprechende Ausgestaltung der Anlagen und/oder Maßnahmen, die zu der entsprechenden Ausgestaltung führen, beschreiben; diesbezüglich sei auf die obigen Ausführungen im Zusammenhang mit dem ersten Ausführungsbeispiel verwiesen, die hier entsprechend gelten.

Erfüllen die bestandsbezogenen Leistungskennzahlen BLK erster bis n-ter Art gemeinsam, sei es jede für sich oder gemeinschaftlich im Sinne einer Gesamtbewertung, bei der einzelne Leistungskennzahlen eine individuelle Schwelle ggf. nicht zwingend erreichen müssen, das vorgegebenes Sollkriterium nicht bzw. noch nicht, so leitet die Bewertungseinrichtung 13 die bestandsbezogenen Leistungskennzahlen BLK erster bis n-ter Art an die Modifikationsreinrichtung 14 weiter, sodass die Optimierungsschleife des oben beschriebenen Optimierungsverfahrens erneut durchlaufen wird, bis das Sollkriterium oder ein sonstiges Abbruchkriterium erfüllt wird; auch diesbezüglich sei auf die obigen Ausführungen im Zusammenhang mit dem ersten Ausführungsbeispiel verwiesen, die hier entsprechend gelten.

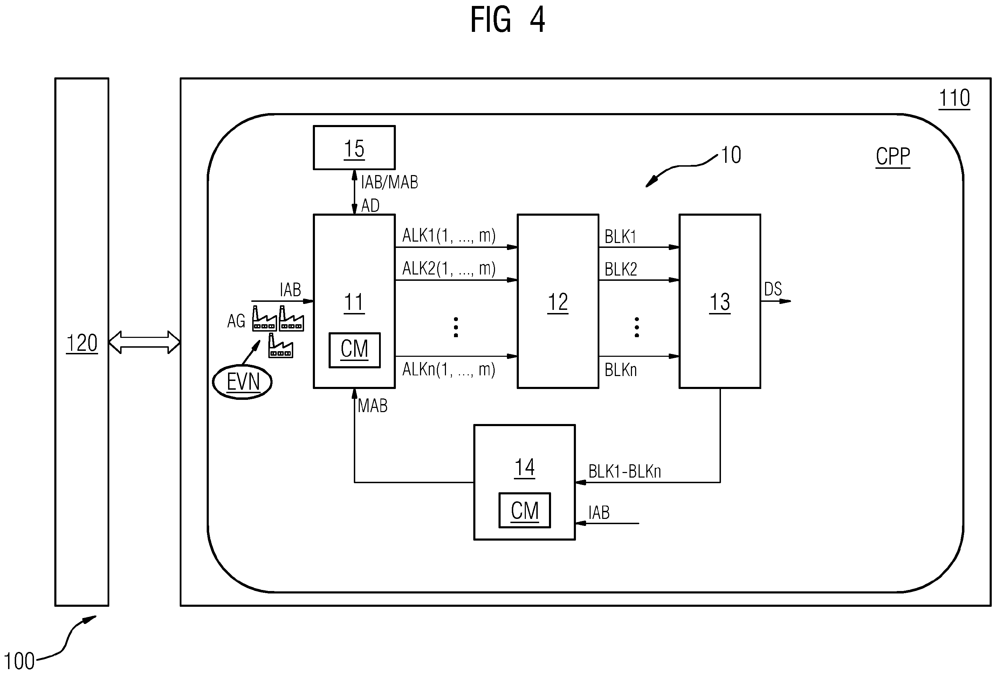

Die Figur 4 zeigt ein drittes Ausführungsbeispiel für eine erfindungsgemäße Anordnung 10, anhand derer beispielhaft Ausführungsvarianten erfindungsgemäßer Verfahren erläutert werden.

Die Anordnung 10 gemäß Figur 4 entspricht der Anordnung 10 gemäß Figur 3 mit dem Unterschied, dass die Leistungsbestimmungseinrichtung 11 unter Einbezug eines Diskretisierens des Suchraumes, und zwar clusterbezogen und nicht anlagenindividuell, arbeitet; dies kann beispielsweise bedeuten, dass die Leistungsbestimmungseinrichtung 11 mittels eines internen Clustermoduls CM jede der in der Anlagenbeschreibung IAB bzw. MAB beschriebenen technischen Anlagen jeweils einem Anlagencluster zuordnet und die Berechnung der anlagenbezogenen Leistungskennzahlen ALK erster bis n-ter Art anhand der Eigenschaften einer dem jeweiligen Cluster zugeordneten Clusterreferenzanlage erfolgt.

Die Modifikationseinrichtung arbeitet ebenfalls unter Einbezug dieses Diskretisierens des Suchraumes, also clusterbezogen, und berücksichtigt mittels eines internen Clustermoduls CM bei der Ermittlung der modifizierten Anlagenbeschreibung MAB nur solche Anlagenmodifikationen, die zu Anlagen führen, die jeweils einem der von der Leistungsbestimmungseinrichtung 11 berücksichtigtem Cluster zugeordnet werden können. Mit anderen Worten würden also Anlagenkonfigurationen, die nicht clustergerecht sind, bei der Optimierung unberücksichtigt bleiben.

Die Cluster bzw. die Clusterbildung kann beispielsweise berücksichtigen, dass die Anlagen nur mit Komponenten vorgegebener Komponententypen ausgestattet werden sollen: Beispielsweise kann berücksichtigt werden, dass zum Beispiel Solarmodule nur in bestimmten Größen und mit bestimmten Leistungsspezifikationen zur Verfügung stehen oder nur solche mit vorgegebenen Größen und mit vorgegebenen Leistungsspezifikationen verbaut werden sollen,

Im Übrigen gelten die obigen Ausführungen im Zusammenhang mit der Figur 3 für das dritte Ausführungsbeispiel gemäß Figur 4 entsprechend.

Alternativ kann bei der Anordnung gemäß Figur 4 vorgesehen sein, dass für alle technisch möglichen Anlagenvarianten und demgemäß alle technisch möglichen Anlagenbestände bzw. Anlagenflotten, insbesondere beispielsweise für alle clusterkonformen Anlagenvarianten und allen technisch möglichen Kombinationen an clusterkonformen Anlagenvarianten, jeweils die resultierenden bestandsbezogenen Leistungskennzahlen BLK1 bis BLKn ermittelt werden und erst anschließend diejenige Anlagenkonfiguration ausgewählt wird, die die besten bestandsbezogenen Leistungskennzahlen BLK1 bis BLKn in der Gesamtbetrachtung ergeben.

In einem solchen Falle beendet die Bewertungseinrichtung 13 also das Durchlaufen der Optimierungsschleife erst, wenn alle technisch möglichen Anlagenbestände bzw. Anlagenflotten erfasst und jeweils die resultierenden bestandsbezogenen Leistungskennzahlen BLK1 bis BLKn vorliegen; erst wenn dies der Fall, trifft die Bewertungseinrichtung 13 die finale Entscheidung, welche der Anlagenbestände bzw. welche der Anlagenflotte als optimal angesehen wird.

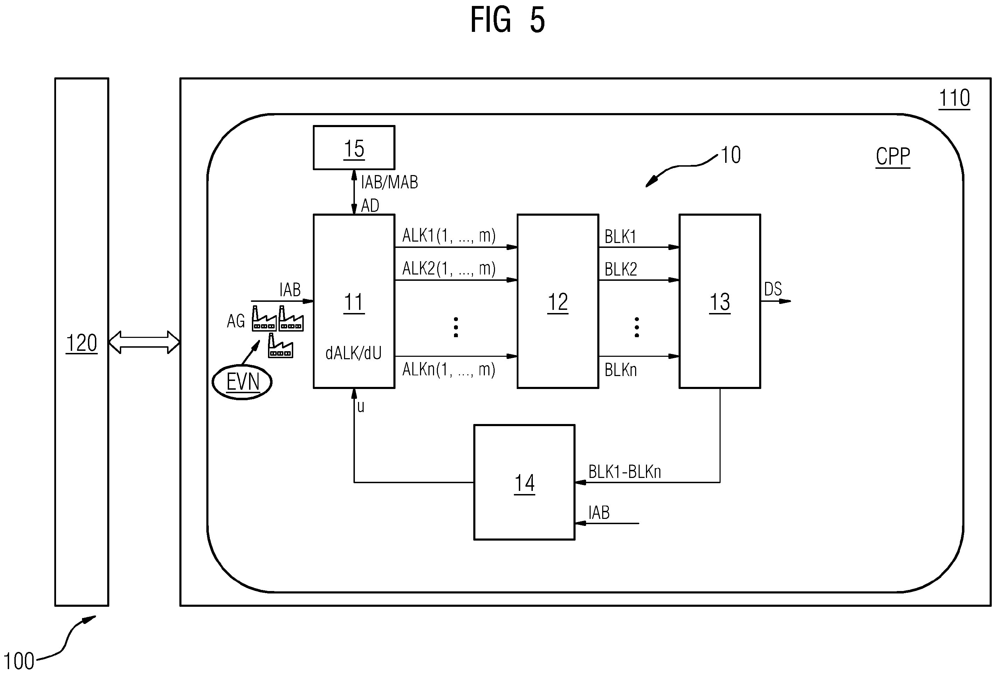

Die Figur 5 zeigt ein viertes Ausführungsbeispiel für eine erfindungsgemäße Anordnung 10, anhand derer beispielhaft Ausführungsvarianten erfindungsgemäßer Verfahren erläutert werden.

Die Anordnung 10 gemäß Figur 5 entspricht der Anordnung 10 gemäß Figur 3 mit dem Unterschied, dass die Leistungsbestimmungseinrichtung 11 unter der Annahme arbeitet, dass sich die anlagenbezogenen Leistungskennzahlen ALK linear mit einer auf den Umfang der jeweiligen Änderungsmaßnahme bezogenen Änderungsrate ändern. Demgemäß kann die Leistungsbestimmungseinrichtung 11 anlagenbezogene Leistungskennzahlen durch eine Multiplikation einer intern abgespeicherten Änderungsrate dALK/dU mit einer von der Modifikationseinrichtung empfangenen Umfangsangabe U, die lediglich den Umfang einer jeweils gewünschten Änderungsmaßnahme definiert, vornehmen.

Im Übrigen gelten die obigen Ausführungen im Zusammenhang mit der Figur 3 für das vierte Ausführungsbeispiel gemäß Figur 5 entsprechend.

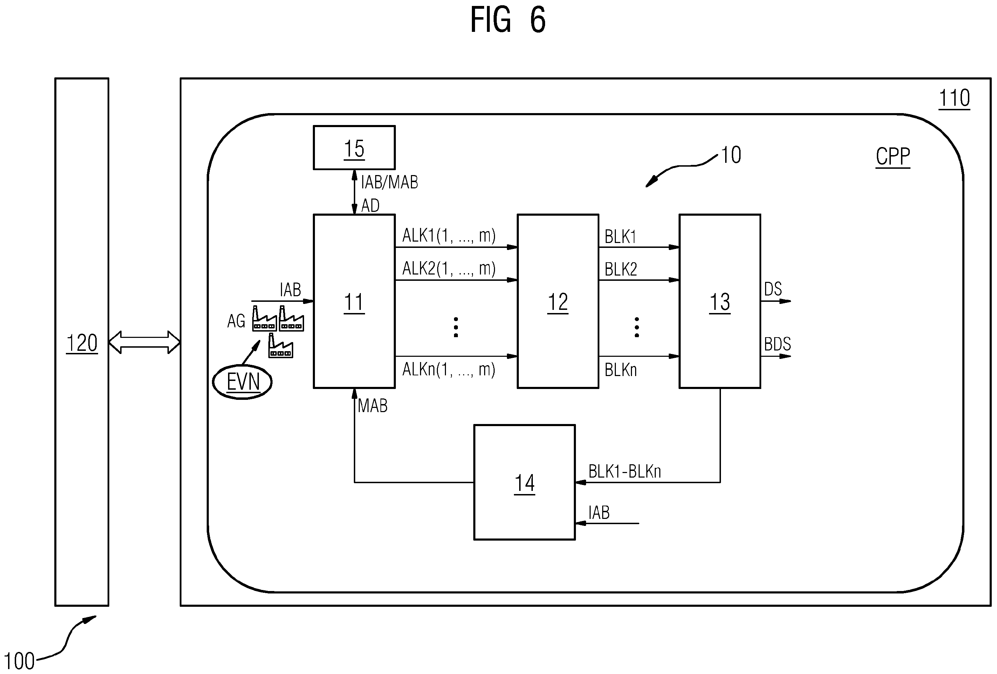

Die Figur 6 zeigt ein fünftes Ausführungsbeispiel für eine erfindungsgemäße Anordnung 10, anhand derer beispielhaft Ausführungsvarianten erfindungsgemäßer Verfahren erläutert werden.

Bei der Anordnung gemäß Figur 6 ist vorgesehen sein, dass nach dem Auffinden der das Sollkriterium erfüllenden veränderten Ausgestaltung die Bewertungseinrichtung 13 zusätzlich einen Betriebsdatensatz BDS erzeugt, der für den Betrieb der veränderten Ausgestaltung der Anlagen des Anlagenbestands geeignete Betriebsparameter enthält.

Im Übrigen können die obigen Ausführungen im Zusammenhang mit den Figuren 3 bis 5 - je nach der Ausgestaltung des Optimierungsverfahrens - für das fünfte Ausführungsbeispiel gemäß Figur 6 entsprechend gelten.

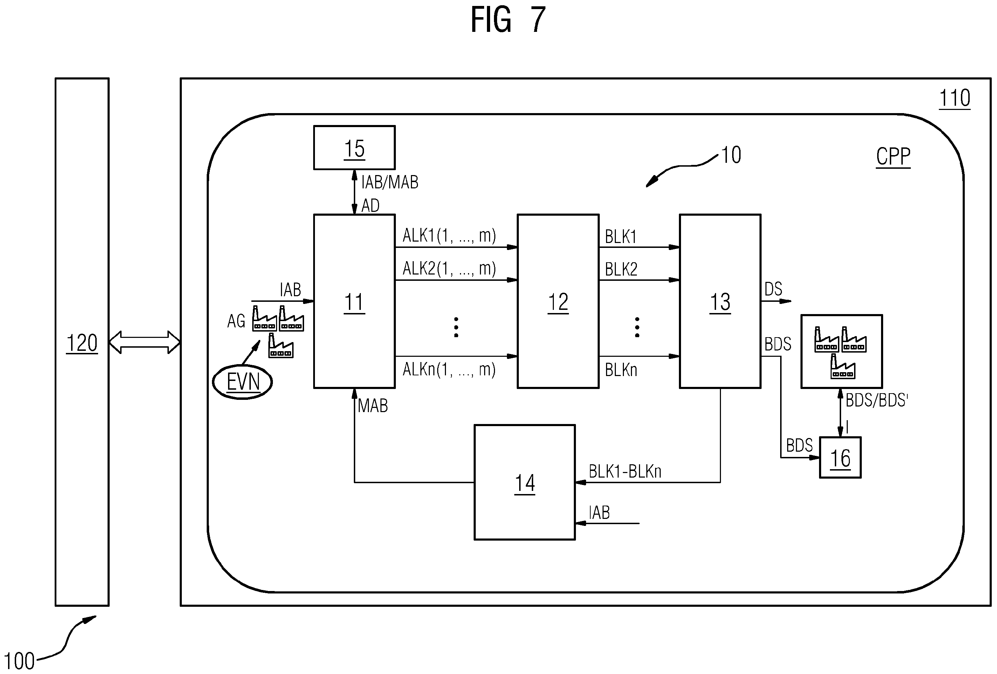

Die Figur 7 zeigt ein sechstes Ausführungsbeispiel für eine erfindungsgemäße Anordnung 10, anhand derer beispielhaft Ausführungsvarianten erfindungsgemäßer Verfahren erläutert werden.

Bei der Anordnung gemäß Figur 7 ist ein Steuerungsmodul 16 vorgesehen, das das Betriebsverhalten des durch den Datensatz DS beschriebenen Anlagenbestands im realen Betrieb beobachtet und anhand von Beobachtungsinformationen I die Betriebsparameter des Betriebsdatensatzes BDS während des Anlagenbetriebs unter Bildung eines modifizierten Betriebsdatensatzes BDS' anpasst, wenn das tatsächlich beobachtete Betriebsverhalten von dem simulierten erwarteten Betriebsverhalten abweicht.

Im Übrigen gelten die obigen Ausführungen im Zusammenhang mit der Figur 6 für das Ausführungsbeispiel gemäß Figur 7 entsprechend.

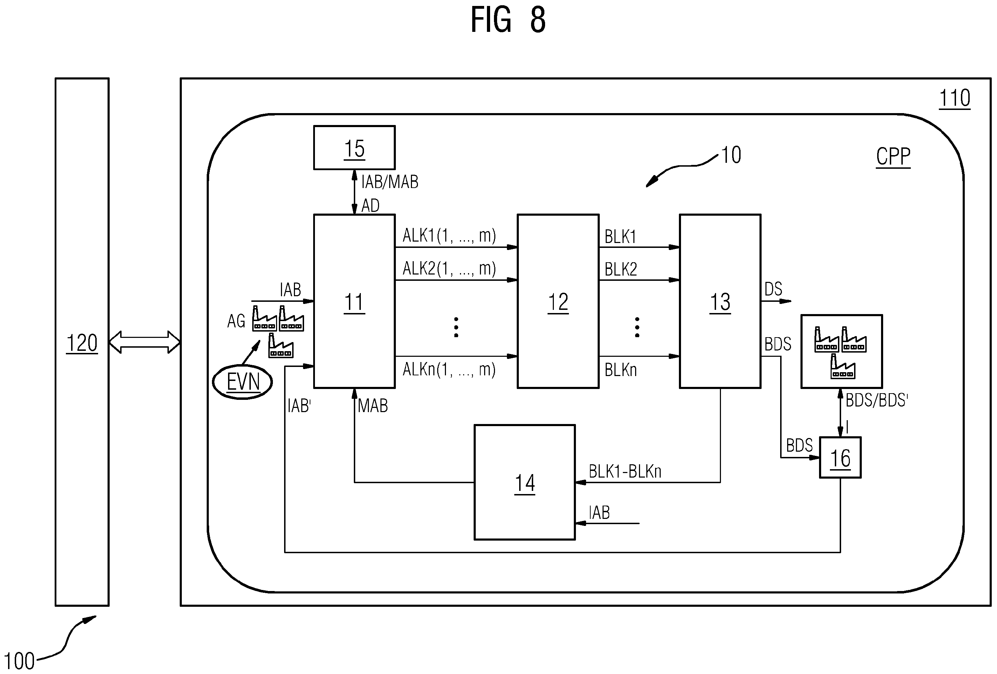

Die Figur 8 zeigt ein siebentes Ausführungsbeispiel für eine erfindungsgemäße Anordnung 10, anhand derer beispielhaft Ausführungsvarianten erfindungsgemäßer Verfahren erläutert werden.

Bei der Anordnung gemäß Figur 8 ist das Steuerungsmodul 16 dazu ausgestaltet, Anlageneigenschaften unter Bildung einer neuen initialen Anlagenbeschreibung IAB' zu ermitteln, die anschließend für eine erneute Durchführung des Optimierungsverfahrens zur Optimierung des Anlagenbestands herangezogen werden. Die Ermittlung der neuen initialen Anlagenbeschreibung IAB' kann beispielsweise erfolgen, wenn das tatsächlich beobachtete Betriebsverhalten von dem simulierten erwarteten Betriebsverhalten über ein vorgegebenes Maß hinaus abweicht.

Im Übrigen gelten die obigen Ausführungen im Zusammenhang mit der Figur 7 für das Ausführungsbeispiel gemäß Figur 8 entsprechend.

Bei allen im Zusammenhang mit den Figuren 1 bis 8 beschriebenen Anordnungen kann im Übrigen vorgesehen sein, dass für das Optimierungsverfahren von einer initialen Anlagenmodifikation ausgegangen und diese initiale Anlagenmodifikation im Rahmen der Optimierung modifiziert wird, bis die das Sollkriterium erfüllende veränderte Ausgestaltung aufgefunden wird. Beispielsweise kann die Modifikationsreinrichtung 14 eine solche initiale Anlagenmodifikation IAF verarbeiten, wie beispielhaft die Figur 2 stellvertretend für alle Figuren zeigt.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Bezugszeichenliste

| | |
|---|---|
| 10 | Anordnung |
| 11 | Leistungsbestimmungseinrichtung |
| 12 | Zusammenfassungseinrichtung |
| 13 | Bewertungseinrichtung |
| 14 | Modifikationseinrichtung |
| 15 | Scrapingwerkezug |
| 16 | Steuerungsmodul |
| 100 | Datenverarbeitungsanlage |
| 110 | Speicher |
| 120 | Recheneinrichtung |
| AD | Anlagedaten |
| AG | Anlagenbestand |
| ALK | anlagenbezogene Leistungskennzahl |
| BDS | Betriebsdatensatz |
| BDS' | modifizierter Betriebsdatensatz |
| BLK | bestandsbezogene Leistungskennzahl |
| CM | Clustermodul |
| CPP | Computerprogrammprodukt |
| dALK/dU | Änderungsrate |
| DS | Datensatz |
| EVN | Energieversorgungsnetz |
| I | Beobachtungsinformation |
| IAB | initiale Anlagenbeschreibung |
| IAB' | neue initiale Anlagenbeschreibung |
| IAF | initiale Anlagenmodifikation |
| IBLK | bestandsbezogene Ist-Leistungskennzahl |
| IALK | anlagenbezogene Ist-Leistungskennzahl |
| m | natürliche Zahl |
| MAB | modifizierte Anlagenbeschreibung |
| n | natürliche Zahl |
| U | Umfangsangabe |

**Patentansprüche**

1. Computerimplementiertes Verfahren zur Optimierung technischer Anlagen eines vorgegebenen Anlagenbestands (AG) mittels einer Datenverarbeitungsanlage (100), **dadurch gekennzeichnet, dass**

- für jede technische Anlage des vorgegebenen Anlagenbestands (AG) jeweils eine anlagenbezogene Ist-Leistungskennzahl (IAKL) erster Art ermittelt wird, die eine Eigenschaft der jeweiligen Anlage beschreibt,
- mit den anlagenbezogenen Ist-Leistungskennzahlen (IAKL) erster Art eine bestandsbezogene Ist-Leistungskennzahl (IBKL) erster Art des Anlagenbestands (AG) gebildet wird, die die Eigenschaft bezogen auf den Anlagenbestand (AG) beschreibt, und
- ein Optimierungsverfahren durchgeführt wird, bei dem

- Anlagenmodifikationen simuliert werden und für jede simulierte Anlagenmodifikation jeweils zumindest eine simulierte anlagenbezogene Leistungskennzahl (ALK) erster Art ermittelt wird,
- unter Heranziehung der simulierten anlagenbezogenen Leistungskennzahlen (ALK) erster Art für jede simulierte Anlagenmodifikation jeweils eine simulierte bestandsbezogene Leistungskennzahl (BLK) erster Art gebildet wird,
- nach einer veränderten Ausgestaltung einer oder mehr Anlagen des Anlagenbestands (AG) gesucht wird, die zu einer Verbesserung der simulierten bestandsbezogenen Leistungskennzahl (BLK) erster Art - verglichen mit der bestandsbezogenen Ist-Leistungskennzahl (IBKL) erster Art - gemäß einem vorgegebenen Sollkriterium führt, und
- bei Auffinden einer das Sollkriterium erfüllenden veränderten Ausgestaltung ein Datensatz (DS) ausgegeben wird, der die veränderte Ausgestaltung der Anlagen und/oder Maßnahmen, die zu der veränderten Ausgestaltung führen, beschreibt.

2. Verfahren nach Anspruch 1,
**dadurch gekennzeichnet, dass**
das Ermitteln von Anlagendaten (AD), die eine Berechnung der anlagenbezogenen Leistungskennzahlen (ALK) ermöglichen, eine automatisierte Internetrecherche mit einem Scraping-Werkzeug (15) und einem Zugriff auf Datenbanken mit öffentlich zugänglichen Informationen einschließt.

3. Verfahren nach einem der voranstehenden Ansprüche,
**dadurch gekennzeichnet, dass**
die anlagenbezogene Ist-Leistungskennzahl (IAKL) erster Art, die bestandsbezogene Ist-Leistungskennzahl (IBKL) erster Art, die simulierten anlagenbezogenen Leistungskennzahlen (ALK) erster Art und die simulierten bestandsbezogenen Leistungskennzahlen (BLK) erster Art jeweils dieselbe technische Größe beschreiben oder - im Falle einer Zusammenfassung von Einzelkriterien zu einer zusammengefassten Kennzahl - auf denselben technischen Größen beruhen.

4. Verfahren nach einem der voranstehenden Ansprüche,
**dadurch gekennzeichnet, dass**
die anlagenbezogene Ist-Leistungskennzahl (IAKL) erster Art, die bestandsbezogene Ist-Leistungskennzahl (IBKL) erster Art, die simulierten anlagenbezogenen Leistungskennzahlen (ALK) erster Art und die simulierten bestandsbezogenen Leistungskennzahlen (BLK) erster Art jeweils als technische Größe

- den CO2-Ausstoß der jeweiligen Anlage bzw. des Anlagenbestands (AG) unmittelbar angeben oder diesen zumindest auch berücksichtigen oder
- die Zeitdauer des Weiterbetriebs der jeweiligen Anlage bzw. des Anlagenbestands (AG) im Falle eines Ausfalls eines die Anlagen versorgenden externen Energieversorgungsnetzes (EVN) unmittelbar angeben oder diese zumindest auch berücksichtigen oder
- den Energieverbrauch der jeweiligen Anlage bzw. des Anlagenbestands (AG) unmittelbar angeben oder diesen zumindest auch berücksichtigen oder
- die Energiekosten der jeweiligen Anlage bzw. des Anlagenbestands (AG) unmittelbar angeben oder diesen zumindest auch berücksichtigen oder

- die Betriebskosten der jeweiligen Anlage bzw. des Anlagenbestands (AG) angeben oder diese zumindest auch berücksichtigen oder
- die Restlebensdauer der jeweiligen Anlage bzw. des Anlagenbestands (AG) unmittelbar angeben oder diese zumindest auch berücksichtigen oder
- die Nachhaltigkeit der jeweiligen Anlage bzw. des Anlagenbestands (AG) unmittelbar quantifizieren oder diese zumindest auch berücksichtigen oder
- den Anteil an nachhaltig erzeugter Energie am Gesamtenergieverbrauch der jeweiligen Anlage bzw. des Anlagenbestands (AG) unmittelbar quantifizieren oder diese zumindest auch berücksichtigen.

5. Verfahren nach einem der voranstehenden Ansprüche,
**dadurch gekennzeichnet, dass**

- für jede Anlage des Anlagenbestands (AG) jeweils anlagenbezogene Leistungskennzahlen (AKL) zweier oder mehr unterschiedlicher Arten ermittelt werden und diese zu zwei oder mehr korrespondierenden bestandsbezogenen Leistungskennzahlen (BKL) der jeweils entsprechenden Art zusammengefasst werden,
- im Rahmen des Optimierungsverfahrens für jede Anlagenmodifikation einer oder mehr Anlagen des Anlagenbestands (AG) jeweils die simulierten bestandsbezogenen Leistungskennzahlen (BLK) der zwei oder mehr Arten ermittelt werden und
- das Sollkriterium vorsieht, dass alle oder zumindest eine vorgegebene Mindestzahl an simulierten bestandsbezogenen Leistungskennzahlen (BLK) ein artindividuelles Einzelkriterium erfüllen.

6. Verfahren nach einem der voranstehenden Ansprüche,
**dadurch gekennzeichnet, dass**

- das Optimierungsverfahren unter Einbezug eines Diskretisierens des Suchraumes erfolgt und bei der Suche nach der das Sollkriterium erfüllenden Ausgestaltung angenommen wird, dass die Anlagen extern vorgegebenen Randbedingungen unterworfen sind, und
- nur solche Anlagenmodifikationen im Rahmen des Optimierungsverfahrens bei der Berechnung der anlagenbezogenen und bestandsbezogenen Leistungskennzahlen (BLK) berücksichtigt werden, die sich auf die extern vorgegebenen Randbedingungen erfüllende Anlagen beziehen.

**7.** Verfahren nach einem der voranstehenden Ansprüche,

**dadurch gekennzeichnet, dass**

für alle Anlagenmodifikationen, die zu die extern vorgegebenen Randbedingungen erfüllenden Anlagen führen, jeweils die simulierten bestandsbezogenen Leistungskennzahlen (BLK) gebildet werden und anhand aller ermittelten bestandsbezogenen Leistungskennzahlen (BLK) die oder eine der das Sollkriterium erfüllenden veränderten Ausgestaltung ausgewählt wird.

**8.** Verfahren nach einem der voranstehenden Ansprüche,

**dadurch gekennzeichnet, dass**

für das Optimierungsverfahren von einer initialen Anlagenmodifikation (IAM) ausgegangen und diese initiale Anlagenmodifikation (IAM) im Rahmen der Optimierung modifiziert wird, bis die das Sollkriterium erfüllende veränderte Ausgestaltung aufgefunden wird.

**9.** Verfahren nach einem der voranstehenden Ansprüche,

**dadurch gekennzeichnet, dass**

- bei der Suche nach der das Sollkriterium erfüllenden Ausgestaltung die Anlagen des Anlagenbestands (AG) clusterbezogen berücksichtigt werden, indem jede der Anlagen zunächst jeweils einem von zumindest zwei unterschiedlichen Clustern zugeordnet wird und die Berechnung der jeweiligen simulierten anlagenbezogenen Leistungskennzahlen (ALK) anhand der Eigenschaften einer dem jeweiligen Cluster zugeordneten Clusterreferenzanlage erfolgt und/oder
- bei der Suche nach der das Sollkriterium erfüllenden Ausgestaltung die Maßnahmen unter Bildung eines vorgegebenen Maßnahmenkatalogs, in dem eine Vielzahl an möglichen Maßnahmen aufgeführt ist, ausgewählt werden.

**10.** Verfahren nach einem der voranstehenden Ansprüche,

**dadurch gekennzeichnet, dass**

- bei der Suche nach der das Sollkriterium erfüllenden Ausgestaltung angenommen wird, dass sich die anlagenbezogenen Leistungskennzahlen (ALK) linear mit einer auf den Umfang (U) der jeweiligen Änderungsmaßnahme bezogenen Änderungsrate (dALK/dU) ändern, und
- die Berechnung der anlagenbezogenen Leistungskennzahlen (ALK) die Multiplikation der Änderungsrate (dALK/dU) mit dem jeweiligen durch die Änderungsmaßnahme vorgesehenen Änderungsumfang (dU) einschließt.

**11.** Verfahren nach einem der voranstehenden Ansprüche,

**dadurch gekennzeichnet, dass**

- das Sollkriterium vorsieht, dass eine gewünschte Mindestverbesserung der simulierten bestandsbezogenen Leistungskennzahl (BLK) erreicht wird und/oder
- das Sollkriterium vorsieht, dass eine maximale Erhöhung der simulierten bestandsbezogenen Leistungskennzahl (BLK) für einen vorgegebenen Änderungsaufwand erreicht wird.

**12.** Verfahren nach einem der voranstehenden Ansprüche,

**dadurch gekennzeichnet, dass**

die Bildung der bestandsbezogenen Leistungskennzahlen (BLK) eine Mittelwertbildung der anlagenbezogenen Leistungskennzahlen (ALK) einschließt.

**13.** Verfahren nach einem der voranstehenden Ansprüche,

**dadurch gekennzeichnet, dass**

nach dem Auffinden der das Sollkriterium erfüllenden veränderten Ausgestaltung ein Betriebsdatensatz (BDS) erzeugt wird, der für den Betrieb der veränderten Ausgestaltung der Anlagen des Anlagenbestands (AG) geeignete Betriebsparameter enthält.

**14.** Verfahren nach einem der voranstehenden Ansprüche,

**dadurch gekennzeichnet, dass**

das Betriebsverhalten der das Sollkriterium erfüllenden veränderten Ausgestaltung der Anlagen des Anlagenbestands im realen Betrieb beobachtet wird und die Betriebsparameter des Betriebsdatensatzes während des Anlagenbetriebs angepasst werden, wenn das tatsächlich beobachtete Betriebsverhalten von dem simulierten Betriebsverhalten abweicht.

**15.** Verfahren nach einem der voranstehenden Ansprüche,

**dadurch gekennzeichnet, dass**

das Betriebsverhalten der das Sollkriterium erfüllenden veränderten Ausgestaltung der Anlagen des Anlagenbestands im realen Betrieb beobachtet wird und neue Anlageneigenschaften ermittelt werden, die anschließend für eine erneute Durchführung des Verfahrens zur Optimierung des Anlagenbestands herangezogen werden.

**16.** Computerprogrammprodukt,

**dadurch gekennzeichnet, dass**

das Computerprogrammprodukt (CPP) Programmbefehle umfasst, um eine Datenverarbeitungsanlage (100) zu veranlassen, das Verfahren gemäß einem der Ansprüche 1 bis 15 auszuführen, wenn das Computerprogrammprodukt (CPP) auf der Datenverarbeitungsanlage (100) ausgeführt wird.

17. Datenverarbeitungsanlage (100),
    **dadurch gekennzeichnet, dass**
    die Datenverarbeitungsanlage (100) mit einem Computerprogrammprodukt (CPP) nach Anspruch 16 programmiert ist oder zumindest in einem Speicher (110) der Datenverarbeitungsanlage (100) abgespeichert ist.

FIG 1

FIG 2

EP 4 734 019 A1

# FIG 3

EP 4 734 019 A1

FIG 4

EP 4 734 019 A1

FIG 5

EP 4 734 019 A1

## FIG 6

EP 4 734 019 A1

# FIG 7

FIG 8

EP 4 734 019 A1

Europäisches Patentamt
European Patent Office
Office européen des brevets

# EUROPÄISCHER RECHERCHENBERICHT

**Nummer der Anmeldung**

EP 24 20 9174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/169121 A1 (ABU EL ATA NABIL A [US] ET AL) 23. Mai 2024 (2024-05-23) <br> * Zusammenfassung * <br> * Absätze [0005] - [0010] * <br> * Absätze [0034] - [0054]; Abbildungen 1-3 * <br> * Absätze [0061] - [0095]; Abbildungen 6,7 * <br> * Absatz [0112] * <br> * Absatz [0132]; Abbildung 12 * <br> * Absätze [0168] - [0189] * <br> ----- | 1-17 | INV. <br> G06Q10/04 <br> G06Q10/0637 <br> G06Q50/04 <br> G06Q50/06 <br> G06Q10/20 |
| A | US 2009/043406 A1 (GAUDER MARKUS [DE] ET AL) 12. Februar 2009 (2009-02-12) <br> * Zusammenfassung * <br> * Absätze [0001] - [0058] * <br> ----- | 1-17 | |
| A | US 2009/204234 A1 (SUSTAETA ANGEL [US] ET AL) 13. August 2009 (2009-08-13) <br> * Zusammenfassung * <br> * Absätze [0010] - [0028] * <br> * Absätze [0092] - [0099] * <br> ----- | 1-17 | RECHERCHIERTE SACHGEBIETE (IPC) <br><br> G06Q |
| A | US 2023/012832 A1 (COMO CHRISTOPHER WAYNE [US] ET AL) 19. Januar 2023 (2023-01-19) <br> * Zusammenfassung * <br> * Absätze [0107] - [0128] * <br> * Absätze [0140] - [0142] * <br> ----- <br> -/-- | 1-17 | |

Der vorliegende Recherchenbericht wurde für alle Patentansprüche erstellt

| Recherchenort | Abschlußdatum der Recherche | Prüfer |
|---|---|---|
| München | 13. März 2025 | Dedek, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches Patentamt

European Patent Office

Office européen des brevets

# EUROPÄISCHER RECHERCHENBERICHT

**Nummer der Anmeldung**

EP 24 20 9174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | REDDY N SOMANATH ET AL: "Scalable and Adaptive Web Scraping Framework for Extracting Diverse Data from Open Internet Sources", 2024 4TH INTERNATIONAL CONFERENCE ON PERVASIVE COMPUTING AND SOCIAL NETWORKING (ICPCSN), IEEE, 3. Mai 2024 (2024-05-03), Seiten 872-877, XP034657177, DOI: 10.1109/ICPCSN62568.2024.00147 [gefunden am 2024-07-30] * Zusammenfassung * ----- | 2 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 13. März 2025 | Dedek, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 9174

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2025

| Im Recherchenbericht angeführtes Patentdokument | Datum der Veröffentlichung | Mitglied(er) der Patentfamilie | Datum der Veröffentlichung |
|---|---|---|---|
| US 2024169121 A1 | 23-05-2024 | JP 2024068660 A | 20-05-2024 |
| | | US 2024169121 A1 | 23-05-2024 |
| US 2009043406 A1 | 12-02-2009 | CN 101163642 A | 16-04-2008 |
| | | DE 102005004233 A1 | 17-08-2006 |
| | | EP 1841695 A1 | 10-10-2007 |
| | | US 2009043406 A1 | 12-02-2009 |
| | | WO 2006079483 A1 | 03-08-2006 |
| US 2009204234 A1 | 13-08-2009 | KEINE | |
| US 2023012832 A1 | 19-01-2023 | CN 115617385 A | 17-01-2023 |
| | | EP 4120067 A1 | 18-01-2023 |
| | | US 2023012832 A1 | 19-01-2023 |

Für nähere Einzelheiten zu diesem Anhang : siehe Amtsblatt des Europäischen Patentamts, Nr.12/82

EPO FORM P0461